# EUROPEAN PATENT APPLICATION

(11) **EP 2 523 159 A1**
(43) Date of publication of application: **14.11.2012**
(21) Application number: 12167617.5
(22) Date of filing: 11.05.2012
(51) Int. Cl.: G06Q 50/06

(54) **Nodal data processing system and method**

(30) Priority: 13.05.2011 GB 201107993; 13.05.2011 US 201113107827
(71) Applicant: Onzo Limited, London WC2H 7JB (GB)
(72) Inventor: Westbrooke, Adam Richard, Sevenoaks, Kent TN14 5AQ (GB)
(74) Representative: Hill, Justin John

(57) **Abstract**

A method of operating a nodal data processing system comprising a plurality of nodes connected by communications links, the nodes being arranged in a hierarchical structure having higher and lower levels, wherein data communicated between the nodes is divided into time series data and fact data, time series data is communicated from a node to a node at a higher level in the hierarchy, and fact data is communicated from a node to a node at a lower level in the hierarchy.

## Description

### Field of the Invention

This invention relates to a nodal data processing system, and methods and computer code for the storage and transfer of data in a nodal data processing system, particularly data associated with consumption of utilities such as gas, water and electricity, and to transfer the stored utility consumption data for applications such as analysis of household power consumption by an end-user or by a utility supplier, or monitoring occupancy and activity within a household.

### Background

There is an ongoing and urgent need to reduce consumption of energy and water both for environmental and cost reasons.

A large proportion of the energy and water supplied by utilities suppliers is wasted as a result of inefficiencies such as use of electrical appliances that have poor efficiency or for behavioural reasons such as appliances that are left switched on and so consume electricity even when not in use, or excessive consumption of water. This leads to wastage and increased utilities costs. Moreover, with respect to electricity, electrical energy use in buildings accounts for a very large proportion of all carbon emissions. Demand for utilities can vary dramatically between identical buildings with the same number of occupants, and this suggests that reducing waste through behavioural efficiency is essential. Therefore, efforts are required to change the patterns of utilities use by consumers.

The utilities suppliers recognise three major obstacles to progress in this objective: a shortage of sources of competitive advantage, a lack of detailed understanding of their customers, and a lack of "touch points", i.e. ways of interacting with the customers. Opportunities for differentiation revolve mainly around price and "green" issues, i.e. reduction of environmental impact. The utilities suppliers have very little information about their customers' behaviour since electricity, gas and water meters collect whole house data continuously and are read infrequently.

Meters to measure total consumption of utilities of a household are commonplace for each of gas, electricity and water, however this total is not useful in identifying areas in which efficiencies may be possible (for brevity, we refer herein to a "household", however it will be appreciated that the present invention is not limited to a domestic house but may be applied to any domestic, workplace or other setting that receives its own discrete utilities supplies, in particular mains electricity supply from an electricity grid; water supply; and I or gas supply.).

Apparatus for monitoring consumption of a resource such as electricity supplied on a cable is disclosed in WO 2008/142425. While a meter of this type is beneficial in assisting a user to review energy consumption patterns, when the meter is operated in a high resolution mode, for example measuring power consumption at one second intervals, there is a problem in storing the relatively large amount of power consumption data produced by the meter. Further, when the power consumption data is stored by the meter and subsequently sent to a remote device for display or analysis of resource consumption there is a problem in selecting and transferring the relatively large amount of power consumption data stored by the meter. Further, when the power consumption data is stored by the meter and subsequently sent to a remote device for display or analysis of resource consumption, if communication between meter and the remote device is interrupted there can be problems in selecting and transferring stored power consumption data to the remote device.

It is therefore an object of the invention to provide a nodal data processing system for storage, recovery and transmission of utilities consumption data from a household.

### Summary of the Invention

According to a first aspect the invention provides a method of operating a nodal data processing system comprising a plurality of nodes connected by communications links, the nodes being arranged in a hierarchical structure having higher and lower levels;
wherein data communicated between the nodes is divided into time series data and fact data;
time series data is communicated from a node to a node at a higher level in the hierarchy; and
fact data is communicated from a node to a node at a lower level in the hierarchy.

Optionally, the fact data is communicated from a node to nodes at both a lower level and a higher level in the hierarchy.

Optionally, the time series data comprises a series of values each having an associated sequence indicator.

Optionally, each sequence indicator is a timestamp.

Optionally, each timestamp indicates when the associated value was generated.

Optionally, a node receiving time series data from a lower level node and forwarding the time series data to a higher level node forwards the received sequence indicators without change.

Optionally, the fact data comprises a fact value and an associated sequence indicator.

Optionally, each sequence indicator is a timestamp.

Optionally, each timestamp indicates when the associated value was generated.

Optionally, a node receiving fact data from a first other node and forwarding the fact data to a second other node forwards the received sequence indicator without change.

Optionally, a node receiving time series data from a lower level node and forwarding the time series data to a higher level node also stores the time series data and the received sequence indicators in a storage means.

Optionally, the node receiving time series data from a lower level node stores the time series data and the received sequence indicators before forwarding the time series data to a higher level node.

Optionally, the node receiving time series data from a lower level node compares the sequence indicators associated with the received time series data to the sequence indicators associated with the stored time series data; and
if the sequence indicators are the same, the received time series data is not stored or forwarded.

Optionally, a node receiving fact data from a first other node and forwarding the fact series data to a second other node also stores the fact data and the received sequence indicators in a storage means.

Optionally, the node receiving fact data from a first other node stores the fact data and the received sequence indicators before forwarding the fact data to a second other node.

Optionally, the node receiving fact data from a first other node compares the sequence indicator associated with the received fact data to the sequence indicator associated with stored fact data; and
if the comparison does not indicate that the received fact data is more recent than the stored fact data, the received fact data is not stored or forwarded.

Optionally, the node receiving fact data from a first other node compares the sequence indicator associated with the received fact data to the sequence indicator associated with stored fact data; and
if the comparison does indicate that the received fact data is more recent than the stored fact data, the received fact data is not stored, replacing the previously stored fact data, and forwarded.

Optionally, the time series data comprises a series of utility consumption values measured at a series of different times.

Optionally, the utility is selected from gas, electricity and water.

Optionally, the utility is electricity.

Optionally, the measured electricity consumption data includes data of real power.

Optionally, the measured electricity consumption data includes data of reactive power.

Optionally, the measured electricity consumption data includes data of reactive power and real power.

An article of manufacture comprising:
a machine-readable storage medium; and
executable program instructions embodied in the machine readable storage medium that when executed by a programmable system causes the system to act as a node to perform the method according to the first aspect.

The invention further provides systems, devices, computer-implemented apparatus and articles of manufacture for implementing any of the aforementioned aspects of the invention; computer program code configured to perform the steps according to the aforementioned method; a computer program product carrying program code configured to perform the steps according to the aforementioned method; and a computer readable medium carrying the computer program.

"Appliance" as used herein means any device that consumes one or more supplied utility, in particular gas, electricity or water.

### Description of Figures

The invention will now be described in detail with reference to the following figures in which:
Figure 1 is a diagram of a nodal data processing system according to the invention;
Figure 2 is a diagram of a node of the nodal data processing system of figure 1;
Figure 3 is a diagram of hardware providing the node of figure 2;
Figure 4 is a diagram of a part of a first embodiment of a nodal data processing system for processing electrical power consumption data;
Figure 5 is a diagram of a larger part of the nodal data processing system of figure 4; and
Figure 6 is a diagram of a part of a second embodiment of a nodal data processing system for processing electrical power consumption data.

### Detailed Description of the Invention

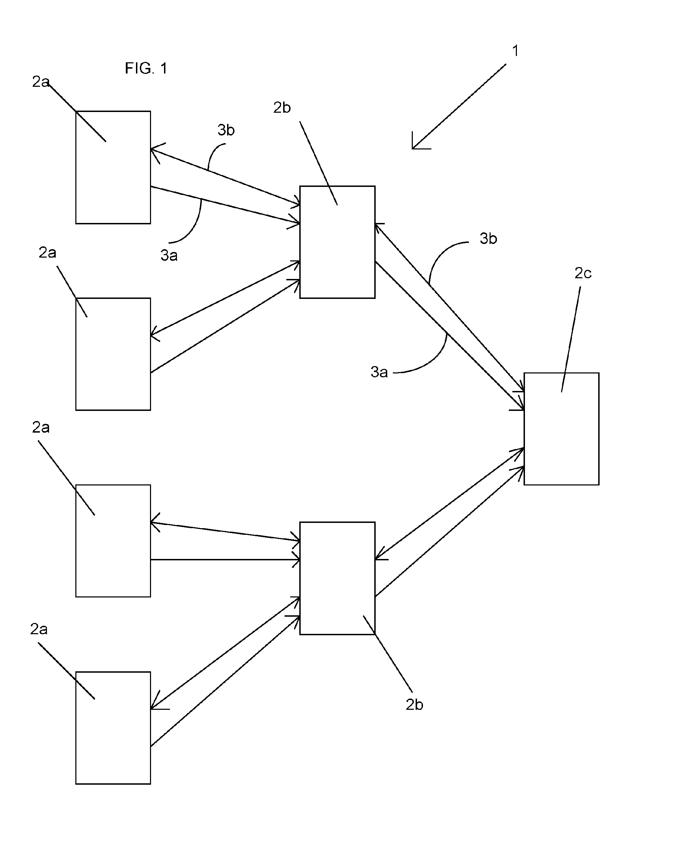

An example of a nodal data processing system according to the present invention is illustrated in Figure 1 with respect to electricity consumption. It will be understood that the nodal data processing system may be used for other purposes and that the described embodiment is described with reference to the measurement, analysis and storage of electricity consumption data as an example only.

It will be appreciated that the same nodal data processing system may equally be used for the measurement, analysis and storage of data relating to consumption of gas or water, or other utilities. Further, although the invention is described herein primarily with respect to electrical power measurement, it will be appreciated that other electrical parameters could be measured, for example admittance, frequency, harmonic distortion, voltage, etc.

An explanatory diagram of an exemplary nodal data processing system 1 is shown in figure 1. The nodal data processing system is made up of a plurality of node devices 2 arranged in a three layer hierarchical structure. Each node 2 is able to store and process data. In the illustrated example the nodes 2 are arranged with a plurality of nodes 2a in a first layer of the hierarchical structure, a plurality of nodes 2b in a second layer of the hierarchical structure and a single node 2c in a third layer of the hierarchical structure. Following the usual convention for hierarchical structures, the first layer of the hierarchical structure will be referred to as the lowest layer of the hierarchical structure and the third layer will be referred to as the highest layer of the hierarchical structure.

Hierarchical structures of this general type can be used in command and control systems where parameters are measured in the nodes in the lowest layer of the structure and reported to the node at the highest level of the structure. The highest level node then makes decisions and sends orders to the lowest level nodes for execution. However, such hierarchical command and control systems generally do not operate effectively if communications between the different nodes are unreliable or intermittent.

In the present invention each of the nodes 2a in the first, lowest layer is connected to a node 2b in the second, middle layer by a pair of communication links 3a and 3b, and each of the nodes 2b in the second, middle layer is connected to each of a plurality of nodes 2a in the first, lower layer by a respective pair of communication links 3a and 3b. Similarly, each of the nodes 2b in the second, middle layer is connected to a node 2c in the third, highest layer by a pair of communication links 3a and 3b, and each of the nodes 2c in the third, highest layer is connected to each of a plurality of nodes 2b in the second, middle layer by a respective pair of communication links 3a and 3b. Each communication link 3a is a unidirectional communication link allowing transfer of data along the communication link 3a only in an upward direction through the hierarchical structure, that is, from a node 2 in a lower layer to a node 2 in a higher layer. Each communication link 3b is a bidirectional communication link allowing transfer of data in either direction along the communication link 3b.

Accordingly, all of the nodes 2 have the capability to transmit data to and receive data from another node or nodes.

Items of data to be communicated between nodes 2 of the nodal data processing system 1 are each categorized as being either time series data or fact data. Data items which are a value forming part of a time series of data values, for example a data item which is one of a series of periodic meter readings, are categorized as being time series data. Data items which are a "stand alone" value which is not part of a time series, for example a data item defining a utility pricing structure, or a data item defining a household temperature model defining how household temperature changes over time, are categorized as being fact data.

Time series data comprises a record of changes in a data value over time, and include both current and past values of the data, and as a result the size or amount of time series data tends to expand over time. Fact data is a current data value. Although this data value may change over time, the fact data does not comprise any record of past changes. As a result, the size or amount of fact data, as opposed to the values of the fact data, does not generally change over time.

Time series data records changes in a parameter over time, and so constitutes a record of changes in the state of the world, as understood by the system. Fact data indicates the current value of a parameter, and so constitutes the current state of the world, as understood by the system.

In the nodal data processing system 1 each node 2 is arranged to send time series data to another node, or nodes, 2 at a higher level in the hierarchical structure through a unidirectional communication link 3a, and to send fact data to other nodes 2, which may be at a higher or lower level in the hierarchical structure, through bidirectional data links 3b.

Accordingly, in the illustrated example of the nodal data processing system 1, time series data flows upwardly through the hierarchical structure along the unidirectional communications links 3a from the nodes 2a in the first, lowest layer to the nodes 2b in the second, middle layer to the node 2c in the third, highest layer. Further, in the illustrated example, fact data flows upwardly and downwardly through the hierarchical structure along the bidirectional communications links 3b between the nodes 2a in the first, lowest layer, the nodes 2b in the second, middle layer and the node 2c in the third, highest layer.

The description above and figure 1 describe and illustrate a nodal data processing system according to the present invention in logical or functional terms. In practice the logical pairs of communication links 3a and 3b may be physically provided by the same hardware. Similarly, each of the communications links 3a and 3b may be made up of a number of different physical communication link sections provided by different hardware.

In the illustrated embodiment of figure 1 there are a smaller number of nodes in higher levels of the hierarchical structure. This is expected to be the most common arrangement in practice. However, this is not essential. A higher level of the hierarchical structure may have an equal number of nodes, or even a greater number of nodes, compared to a lower level of the hierarchical structure.

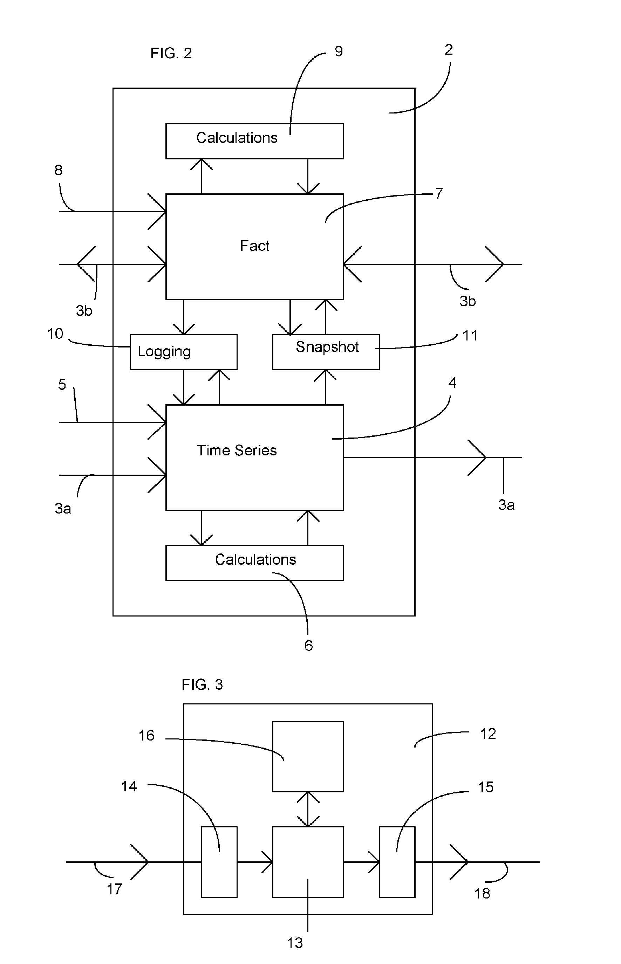

An explanatory diagram showing the functions of a single node 2 in more detail is shown in Figure 2.

The node 2 includes a time series data store 4 storing time series data. The node 2 is able to receive time series data from other nodes 2 at a lower level in the hierarchical structure along a first unidirectional communications link 3a and store this time series data in the time series data store 4. Optionally, the node may also be able to receive time series data from external time series data sources along a first external communications link 5 and store this time series data in the time series data store 4. Further, the node 2 is able to take time series data from the time series data store 4 and send this as a time series to other nodes 2 at a higher level in the hierarchical structure along a second unidirectional communications link 3a.

The node 2 includes a time series calculation element 6 able to take time series data from the time series data store 4 for use in calculations to generate new time series data based upon time series data stored in the time series data store 4 and to store the new time series data generated by the calculations in the time series data store 4.

The node 2 also includes a fact data store 7 storing fact data. The node 2 is able to receive fact data from other nodes 2 at a lower level in the hierarchical structure along a first bidirectional communications link 3b and store this fact data in the fact data store 7. The node 2 is able to receive fact data from other nodes 2 at a higher level in the hierarchical structure along a second bidirectional communications link 3b and store this fact data in the fact data store 7. Optionally, the node may also be able to receive fact data from external fact data sources along a first external communications link 8 and store this fact data in the fact data store 7. Further, the node 2 is able to take fact data from the fact data store 7 and send this fact data to other nodes 2 at both a lower and a higher level in the hierarchical structure along the first and second bidirectional communications links 3b.

The node 2 includes a fact calculation element 9 able to take fact data from the fact data store 7 for use in calculations to generate new fact data based upon fact data stored in the fact data store 9 and to store the new fact data generated by the calculations in the fact data store 7. The node 2 further includes a logging element 10 able to take fact data from the fact data store 7 for use in calculations to generate new time series data based upon the fact data stored in the fact data store 9 and to store the new time series data generated by the calculations in the time series data store 4. For example, the logging element 10 may periodically check a stored fact value and generate a periodic report of the stored value, or changes in the stored value, and so produce a time series for storage in the time series data store 4. The logging element 10 may also be able to take time series data from the time series data store 4 for use in the calculations to generate new time series data.

The node 2 further includes a snapshot element 11 able to take time series data from the time series data store 4 for use in calculations to generate new fact data based upon the time series data stored in the time series data store 4 and to store the new fact data generated by the calculations in the fact data store 7. For example, the snapshot element 11 may take the latest, most recent, value of a time series to produce a fact value of the current value of a parameter, and store this current value in the fact data store 7. The snapshot element 11 may also be able to take fact data from the fact data store 7 for use in the calculations to generate new fact data.

The node 2 shown in figure 2 is a general purpose node which could be used to provide any of the nodes 2a to 2c of figure 1. If the node 2 shown in figure 2 were to be used to provide a node 2a in the lowest level of the hierarchical structure of figure 1 the first unidirectional communications link 3a and the first bidirectional communications link 3b would not be required, and could be omitted or not used, because there are no nodes at a lower level for the node 2 to communicate with. Similarly, if the node 2 shown in figure 2 were to be used to provide the node 2c in the highest level of the hierarchical structure of figure 1 the second unidirectional communications link 3a and the second bidirectional communications link 3b would not be required, and could be omitted or not used, because there are no nodes at a higher level for the node 2 to communicate with.

Figure 2 shows a node having single communications links as the first and second unidirectional communications links 3a, the first and second bidirectional communications links 3b, and the first and second external communications links 5 and 8, for simplicity. If these communications links are to connect to a plurality of data sources or other nodes 2 the illustrated single communications links may be replaced by multiple communications links, or connected through switching or multiplexing means, as is well known in the field of communications.

The description above and figure 2 describe and illustrate the node 2 according to the present invention in logical or functional terms. In practice different functional parts of the node 2 may be physically provided by the same hardware. For example, the time series data store 4 and the fact data store 7 may be provided by the same physical memory device.

An explanatory diagram showing a physical node device 12 providing a single node 2 is shown in Figure 3. The node device 12 includes a processor 13 connected to a receiver unit 14 and a transmitter unit 15. The node device 12 further includes a memory 16 connected to the processor 13. In operation of the node device 12, the processor 13 is able to store data in, and recover data from, the memory device 16. In operation the receiver unit 14 is able to receive data along a receive communication line 17 and pass this data to the processor 13. Further, the transmitter unit 15 is able to receive data from the processor 13 and send this data along a send communication line 18.

In the physical node device 12 of figure 3, different parts of the memory 16 can be used to provide the functions of the time series data store 4 and the fact data store 7. Further, the processor 13 can be used to provide the functions of the time series calculation element 6, the fact series calculation element 9, the logging element 10, and the snapshot element 11. The functions of these different elements may conveniently be provided by different software modules running on the node device 12.

In the physical node device 12 of figure 3, the receiver unit 14 and the receive communication line 17 can be used to provide the functions of the first and second external communications links 5 and 8, the first unidirectional communications link 3a, and the incoming parts of the first and second bidirectional communications links 3b. Similarly, the transmitter unit 15 and the send communication line 18 can be used to provide the functions of the second unidirectional communications link 3a, and the outgoing parts of the first and second bidirectional communications links 3b.

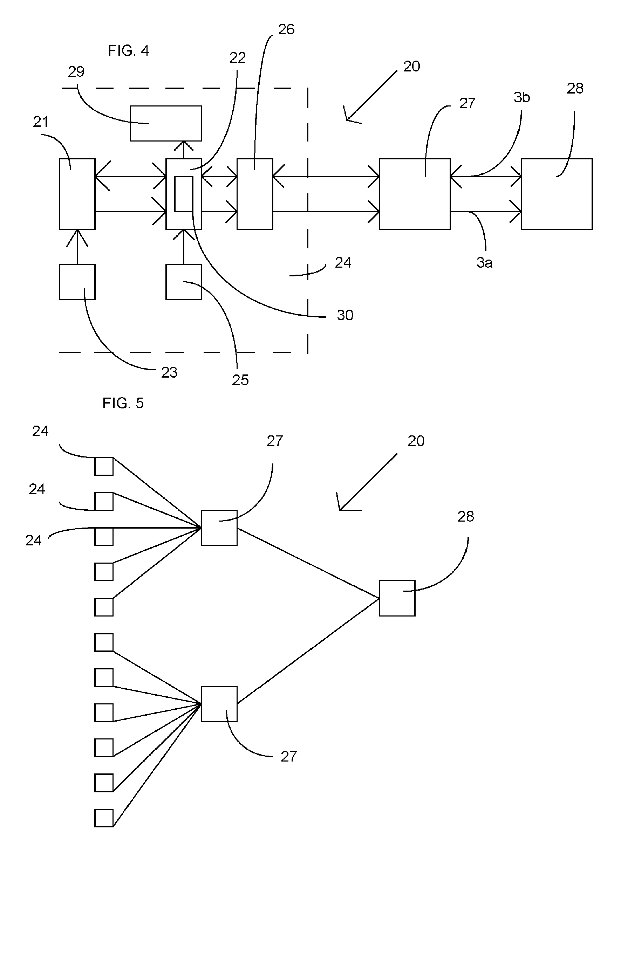

An explanatory diagram of an exemplary nodal data processing system 20 useable to gather and process household electrical power consumption data and control household heating is shown in figures 4 and 5.

The nodal data processing system 20 comprises a smart meter 21 which forms a lowest level node of the nodal data processing system 20. The smart meter 21 is connected to a display device 22 which forms a higher level node of the nodal data processing system 20.

The smart meter 21 is in communication with a current sensor 23 which measures consumed electrical power for a household 24, or other setting that receives its own discrete utilities, at fixed interval time points, generating a stream of time series data comprising a series of measurements of electrical power consumption at fixed intervals. A higher frequency of measurement will obviously yield more electricity consumption data, which in turn will generally increase the usefulness and value of the measured data. Typically, electricity consumption is measured at least once every second.

Preferably, the current sensor 23 measures the current flowing in a live power cable providing the power supply to the household 24. The series of current measurements generated by the current sensor 23 are supplied to the first external communications link 5 of the smart meter 21 and stored in the time series data store 4 of the smart meter 21. The logging element 10 of the smart meter 21 then uses a value of the present voltage of the power supply stored as fact data in the fact data store 7 of the smart meter 21, and the series of current measurements stored in the time series data store 4 of the smart meter 21 to generate a time series of values of consumed electrical power, which is stored in the time series data store 4 of the smart meter 21.

In one embodiment the current sensor 23 may, for example, be incorporated into a single combined device together with the smart meter 21. In this case the current sensor 23 can conveniently be connected to the smart meter 21 by a wired connection. In other embodiments the current sensor 23 may be connected to the smart meter 21 by a wireless connection.

Preferably, the smart meter 21 generates values of consumed electrical power for both real power and reactive power. These values are captured as two separate streams of data, one stream comprising measurements of real power, and the other stream comprising measurements of reactive power ("real power" and "reactive power" as used herein have the meanings as understood by a skilled person in the art in relation to power supplied to a load from an alternating current source). The real power consumption measurements and reactive power consumption measurements are preferably combined into a single stream of two dimensional power measurements, where each measurement comprises both a real power measurement and a reactive power measurement made at the same time, and a sequence indicator indicating the position of the measurement in the series. Conveniently, the sequence indicator may be a timestamp indicating when the measurement was made. The series of two dimensional power measurements are stored in the time series data memory 4 of the smart meter 21, and are then sent as a stream of two dimensional power measurements through the second unidirectional communications link 3a of the smart meter 21 to the display device 22 as a stream of time series data. The smart meter 21 may, for example, send the power measurements to the display device 22 through a wireless communications link. The use of wireless communication links within the household is preferred in order to minimize the cost and inconvenience of adding the system to an existing household infrastructure or moving the parts of the system around within the household.

It would of course be possible as an alternative for the real power and reactive power values to be generated and sent together with respective timestamps as separate streams of time series data. Further, alternative methods of measuring power consumption could be used.

One advantage of measuring both real and reactive power is that, between them, it is possible to measure power demand of most or all appliances. For instance, it may be difficult or impossible to obtain a meaningful measurement of real power for certain appliances such as set-top boxes, however reactive power for these devices can be measured.

The display device 22 receives the stream of values of power measurement time series data from the smart meter 21 as time series data through the first unidirectional communications link 3a of the display device 22, and stores this time series data in the time series data store 4 of the display device 22. The display device 22 checks the timestamps associated with the received and stored stream of values of the power measurement time series data and confirms that the received data is a complete and correct series of time series data, or takes appropriate corrective action as necessary.

For example, the timestamps of received and stored values of the time series data may be compared so that the individual values of the time series data can be arranged in the correct time series order to reproduce the original time series data. If a received value of the time series data is found to have the same timestamp as an already stored value of the same time series data the received value may be identified as a duplicate of the stored value and discarded. If an expected value of the time series data having a particular timing is not received or stored, but values having a later timestamp have been received or stored, the expected value may be identified as missing and the time series data may be identified as incomplete.

The action taken when a stream of time series data is incomplete may vary as appropriate for the type of time series data in any particular implementation. For example, a request may be sent to the lower level node from which the stream of time series data has been received to send the missing value. In another example calculations based on cumulative or average values of the stream of time series data may be adjusted to take into account, and correct for, the missing value.

It may appear at first sight unlikely that the values of a stream of time series data could be received in an incorrect order so that a newly received value would not have a more recent timestamp than all stored values, or in duplicate. Generally, in a network having a simple topology as shown in the examples of figures 4 and 5 where communications are reliable so that the communications links 3a and 3b are usually operating between the nodes 2 it would be unusual for a newly received value not to have a more recent timestamp than all stored values. However, in more complex network topologies, and particularly where communications are unreliable or intermittent so that the communications links 3a and 3b between the nodes 2 may not be available at all times, it may be common for the values of a stream of time series data to be received out of order or multiple times at a node 2 by way of different routes.

The display device 22 is also connected to a temperature sensor 25. The temperature sensor 25 measures the temperature inside the household 24 at fixed time intervals and generates a stream of time series data comprising a series of temperature measurements together with timestamps indicating when the measurements were made. The stream of temperature measurements from the temperature sensor 25 is sent as a stream of time series data to the display device 22. In one embodiment, the temperature sensor 25 may, for example, send the temperature measurements to the display device 22 through a wireless communications link. In other embodiments the temperature sensor 25 may be incorporated into a single combined device together with the display device 22. In this case the temperature sensor 25 can conveniently be connected to the display device 22 by a wired connection. The temperature sensor 25 may associate timestamps with the temperature measurements. Alternatively, the display device 22 may associate timestamps with the temperature measurements when they are received and stored. This alternative may be required, for example, if the temperature sensor 25 is not able to apply timestamps to the temperature measurements. This may be the case if the temperature sensor is a pre-existing or legacy device which is not designed to cooperate with the nodal data processing system 1.

The temperature sensor may conveniently make temperature measurements at one second intervals. However, other intervals may be used. The current sensor 23 and the temperature sensor 25 are asynchronous. It is not necessary that the current and temperature measurements made by the current sensor 23 and the temperature sensor 25 are made at the same fixed time intervals, or that that the current and temperature measurements are made simultaneously.

The display device 22 is also connected to a household heating system 29 so that the display device 22 can control operation of the heating system 29. In one embodiment, the display device 22 may, for example, send instructions to the heating system 29 through a wireless communications link. In other embodiments the temperature sensor 25 may be connected to the display device 22 by a wired connection.

The display device 22 includes a user interface 30 allowing a user to manually input desired household heating instructions to the display device 22. Typically, these instructions may define a desired household temperature or temperatures and time periods during which the temperature(s) are to be maintained. For example, the user may instruct that the household temperature is to be maintained at a value preferred by the user during periods when the user expects the house to be occupied, and that it is also to be maintained above a lower minimum value at all times, for example to ensure water pipes do not freeze. The household heating instructions are stored as a fact or facts in the fact memory 7 of the display device 22.

The display device 22 also has stored in its fact memory 7 a household temperature model defining how the temperature of the household responds to the operation of the heating system. For example, the household temperature model may define how quickly household temperature rises and drops when the heating is on or off, respectively, and the length of the delay before the household temperature begins to rise after the heating is switched on. The household temperature model may take into account time of day in order to allow for the effect of ambient cyclic temperature changes and ambient sunlight.

Using the stored household temperature model the display device 22 is able to control the household temperature by switching the heating system 29 on and off at appropriate times. This use of a household temperature model allows the household temperature to be controlled more accurately than a conventional thermostat based system where a heating system is simply switched on and off based on a comparison of the temperature with a threshold value. Such thermostat based systems are inherently inaccurate because of the delays between switching a heating system on or off and the resulting changes in temperature.

The display device 22 is connected to a desktop node 26, which forms a higher level node 2 of the nodal data processing system 20. The desktop node 26 is formed by a household computer, for example a desktop PC. The display device 22 may, for example, be connected to the desktop node 26 through a wireless communications link.

The desktop node 26 is connected to a local server 27, which forms a higher level node 2 of the nodal data processing system 20. The local server 27 is remotely located outside the household 24. The local server 26 may be operated by an electricity utility provider. The desktop node 26 may, for example, be connected to the local server 26 through a public communications network such as the internet.

The local server 27 is connected to a group server 28, which forms the highest level node 2 of the nodal data processing system 20. The local server 27 may, for example, be connected to the group server 28 through a public communications network such as the internet.

Figure 4 shows a single branch of the nodal data processing system 20 extending from the smart meter 21 to the group server 28. The nodal data processing system 20 as a whole has a structure generally as illustrated in figure 5 where a plurality of households 24 are connected to each local server 27, and a plurality of local servers 27 are connected to the group server 28. There may, for example, be several thousand households 24 connected to each local server 27.

In operation of the nodal data processing system 20 a stream of time series power measurement data from the smart meter 21 is received through the first unidirectional communications link 3a of the display 22, and a stream of time series temperature measurement data from the temperature sensor 25 is received through the first external communications link 5 of the display 22. Both of these streams of time series data are stored in the time series data store 4 of the display 22.

The snapshot element 11 of the display 22 may make a number of calculations based on the stored time series of power and temperature data stored in the time series data store 4 of the display 22 to generate values for various facts which are then stored in the fact memory 7 of the display 22.

For example, the snapshot element 11 may take the most recently received measurement of power data and record this as the fact of current power consumption value in fact memory 7. The snapshot element 11 of the display 22 may take the most recently received measurement of temperature data and record this as the fact of current temperature in fact memory 7. The snapshot element 11 of the display 22 may use the time series of power consumption data stored in the time series data store 4 to calculate a current base load value indicating the current minimum continuous load or base load power. The current base load value may, for example, be defined as the lowest power consumption value during the previous 24 hours, or the lowest power consumption value sustained for at least 5 minutes in the preceding 24 hours. Other definitions or time periods may be used as appropriate in any specific application.

The snapshot element 11 of the display 22 may use the time series of power consumption data stored in the time series data store 4 of the display 22 and facts defining the current electricity utility provider tariff stored in the fact data store 7 of the display 22 to calculate cumulative totals of electrical power cost so far today and/or so far this week and store these cost values as facts in the fact data store 7 of the display 22.

These facts can then be displayed in the user interface 30 of the display 22. The display of these facts may be continuous, or may be carried out only in response to a user request made through the user interface 30.

The snapshot element 11 of the display 22 may use the time series of power consumption data stored in the time series data store 4 to calculate a high use power consumption threshold value which is stored as fact data in the fact data store 7 of the display 22. The fact calculation element 9 of the display 22 may then compare the current power consumption value and the high use power consumption threshold value which are both stored in the fact data store 7 of the display 22 to identify when the current power consumption exceeds the threshold, and generate an alert on the user interface of the display 22.

As discussed above, the display device 22 may control the heating system 29 based upon the stream of time series temperature measurement data from the temperature sensor 25 stored in the time series memory 4 of the display device 22 and the stored household temperature model stored in the fact memory 7 of the display device 22. This control may be carried out based upon calculations by the time series calculation element 6 and the fact calculation element 9 of the display device 22.

The display 22 may generate a stream of time series information identifying the switching on and switching off of the heating system 29, together with timestamps, and send this to the desktop node 26 through the second unidirectional communications link 3a of the display 22. This heating operation data is received by the desktop node 26 through the first unidirectional communications link 3a of the desktop node 26 and stored in the time series data store 4 of the desktop node 26.

The display 22 reads out the stored time series power measurement data from the time series data store 4 of the display 22 and sends this through the second unidirectional communications link 3a of the display 22 to the desktop node 26 as a stream of time series power measurement data, replicating the stream of time series power measurement data generated by the smart meter 21, including the timestamps. This time series power measurement data is received by the desktop node 26 through the first unidirectional communications link 3a of the desktop node 26 and stored in the time series data store 4 of the desktop node 26.

The display 22 reads out the stored time series temperature data from the time series data store 4 of the display 22 and sends this through the second unidirectional communications link 3a of the display 22 to the desktop node 26 as a stream of time series temperature data, replicating the stream of time series temperature data received from the temperature sensor 25, including the timestamps. This time series temperature data is received by the desktop node 26 through the first unidirectional communications link 3a of the desktop node 26 and stored in the time series data store 4 of the desktop node 26.

The snapshot element 11 of the desktop node 26 analyzes the time series power measurement data stored in the time series data store 4 to identify changes in power consumption and uses these changes to detect and identify what appliances are present in the household. The identities of the appliances which have been identified as present in the household and their power consumption signatures are then stored as facts in the fact data store 7 of the desktop node 26. The logging element 10 of the desktop node 26 then analyzes the time series time series power measurement data stored in the time series data store 4 of the desktop node 26, and the appliance identities and signatures stored in the time series data store 7 of the desktop node 26, to determine when the identified appliances are switched on and off and generate a time series of switch on and switch off events for the different appliances present in the household. This time series of appliance switch on and switch off event data may each comprise an appliance identity, an indication of switch on or switch off, and a timestamp.

The identification of appliances and of the switching on and off of the appliances by analysis of power consumption data may be carried out, for example, using techniques as described in PCT/GB2010/002091.

The snapshot element 11 of the desktop node 26 may use the time series of event data stored in the time series data store 4 of the desktop node 26 and facts defining the current electricity utility provider tariff and the power consumption signatures of the identified household appliances stored in the fact data store 7 of the desktop node 26 to calculate the cumulative amount of energy consumed by each appliance and the cumulative cost of the energy consumed by each appliance over a billing period and stores these facts in the fact data store 7 of the desktop node 26. These facts may be accessed and viewed by a user of the computer providing the desktop node, for example, to determine whether re-scheduling household activity would allow the cumulative cost of the energy consumed by specific household appliances to be reduced. If desired the cumulative energy consumption and cost of individual appliances on a daily or weekly basis, or other time periods, may also be stored and accessed.

The desktop node 26 may have the household temperature model stored in the fact store 7 of the desktop node 26. The time series calculation element 6 and snapshot element 11 of the desktop node 26 may read out and use the time series of heating operation data and the time series of temperature measurement data stored in the time series data store 4 of the desktop node 26 to update the stored household temperature model. Further, the fact calculation element 9 of the desktop node 26 may adjust the stored household temperature model in response to the switching on or off of household appliances being identified if the effect on household temperature of the identified appliances is known. Most appliances will release at least some heat into a household environment, and some appliances will release sufficient heat to significantly affect household temperature. Examples of such appliances include electric heaters and ovens.

When the household temperature model stored by the desktop node 26 is changed, the desktop node 26 may read out the new stored household temperature model together with a sequence indicator and send this to the display 22 through the first bidirectional communications link 3b of the desktop node 26. Although facts are not in a series, the value of facts may change and it is desirable to be able to identify the relative ages of different values of the same fact. The association of a sequence indicator with a fact value allows this identification to be made. The sequence identifier may, for example, be a timestamp identifying when the fact value was calculated.

In this case, the new stored household temperature model and timestamp are received by the display 22 through the second bidirectional communications link 3b of the display 22.

As explained above, the display 22 has a stored household temperature model in the fact data store 7 of the display 22 for use in controlling the heating system 29. When a new household temperature model is received the display 22 compares the timestamp of the newly received household temperature model to the timestamp of the stored household temperature model. If the newly received household temperature model has a more recent timestamp than the stored model, the newly received model and timestamp are used to replace the stored value and timestamp, for example by overwriting the stored values with the newer values. Alternatively, if the newly received household temperature model does not have a more recent timestamp than the stored model, the newly received household temperature model and timestamp are discarded and the stored model and timestamp are left unchanged.

When the household temperature model stored by the desktop node 26 is changed, the desktop node 26 may also read out the new stored household temperature model together with a timestamp and send this to the local server 27 through the second bidirectional communications link 3b of the desktop node 26. The new stored household temperature model and timestamp are received by the local server 27 through the first bidirectional communications link 3b of the local server 27.

The desktop node 26 may read out the stored time series of event data from the time series data store 4 of the desktop node 26 and send this through the second unidirectional communications link 3a of the desktop node 26 to the local server 27 as a stream of time series power measurement data. This time series of event data is received by the local server 27 through the first unidirectional communications link 3a of the local server 27 and stored in the time series data store 4 of the local server 27.

The desktop node 26 may read out the stored time series power measurement data from the time series data store 4 of the desktop node 26 and sends this through the second unidirectional communications link 3a to the local server 27 as a stream of time series power measurement data, replicating the stream of time series power measurement data generated by the smart meter 21, including the timestamps. This time series power measurement data is received by the local server 27 through the first unidirectional communications link 3a of the local server 27 and stored in the time series data store 4 of the local server 27.

The desktop node 26 may read out the stored fact data stored in the fact data store 7 of the desktop node 26, such as the identities of the identified household appliances and the power consumption signatures of the identified household appliances, and send these through the second bidirectional communications link 3b to the local server 27 as a items of fact data. These facts are received by the local server 27 through the first bidirectional communications link 3b of the local server 27 and stored in the fact data store 7 of the local server 27.

The local server 27 may provide the power measurement time series data to a utility billing system (not shown) of the electricity supplier to allow the household to be charged for the electrical power consumed. Alternatively, the local server 27 may provide summaries of power measurement time series data to the utility billing system.

The local server 27 may receive a new electricity utility provider tariff from the utility billing system of the electricity supplier when this tariff is changed. The new electricity utility provider tariff is stored in the fact memory 7 of the local server 27 as the current electricity utility provider tariff together with a timestamp. When the electricity utility provider tariff stored by the local server 27 is changed, the local server 27 may read out the new electricity utility provider tariff together with the timestamp and send this to the desktop node 26 through the first bidirectional communications link 3b of the local server 27. The new electricity utility provider tariff and timestamp are received by the desktop node 26 through the second bidirectional communications link 3b of the desktop node 26.

As explained above, the desktop node has a stored current electricity utility provider tariff in the fact data store 7 of the desktop node 26 for use in calculating costs. When a new electricity utility provider tariff is received the desktop node 26 compares the timestamp of the newly received electricity utility provider tariff to the timestamp of the stored electricity utility provider tariff. If the newly received tariff has a more recent timestamp than the stored tariff, the newly received tariff and timestamp are used to replace the stored tariff and timestamp, for example by overwriting the stored values with the newer values. Alternatively, if the newly received tariff does not have a more recent timestamp than the stored tariff, the newly received tariff and timestamp are discarded and the stored tariff and timestamp are left unchanged.

Further, if the newly received tariff has a more recent timestamp than the stored tariff, the desktop node 26 sends the newly received tariff and timestamp to the display 22 through the first bidirectional communications link 3b of the desktop node 26. The new electricity utility provider tariff and timestamp are received by the display 22 through the second bidirectional communications link 3b of the display 22. Similarly to the desktop node 26, the display 22 compares the timestamp of the newly received electricity utility provider tariff to the timestamp of the stored electricity utility provider tariff. If the newly received tariff has a more recent timestamp than the stored tariff, the newly received tariff and timestamp are used to replace the stored tariff and timestamp, for example by overwriting the stored values with the newer values. Alternatively, if the newly received tariff does not have a more recent timestamp than the stored tariff, the newly received tariff and timestamp are discarded and the stored tariff and timestamp are left unchanged.

When the local server 27 receives a new household temperature model from the desktop node 26, the local server 27 compares the timestamp with any stored household temperature model for that household to confirm whether it is newer than any stored model, and it is stored or discarded as appropriate. Each new household temperature model is reviewed to assess whether the parameters of the model are within acceptable limits, or whether the model parameters indicate that there may be some problem with the household. If a possible problem is indicated, the local server sends an alert message to the desktop node 26 of the relevant household.

As discussed above, the local server 27 will generally be connected to a large number of households, such as several thousand, households. The snapshot element 11 of the local server 27 may analyze the facts and time series data stored in the time series data store 4 and the fact data store 7 of the local server 7 originating from a large number of different households located in a geographical region having a common mains, or grid, electrical power supply, and determine the power supply voltage of the electrical power supply in this region. If this determined present power supply voltage value has changed compared to a previously determined value the newly determined present power supply voltage value is saved in the fact data store 7 of the local server 27.

The local server 27 may receive ambient temperature information and/or other forms of weather data for a geographic region from external sources through the first external communications link 5 of the local server 27. When the weather data for the geographic region indicates a change sufficient to affect the accuracy of the household temperature model used by display 22, the local server 27 can generate a fact defining the change and send this to the desktop node 26 through the first bidirectional communications link 3b of the local server 27. This fact is received by the desktop node 26 through the second bidirectional communications link 3b of the desktop node 26 and stored in the fact memory 7 of the desktop node 26. The stored fact regarding weather conditions can be used in addition to the facts discussed above by the desktop node 26 when calculating changes to the household temperature model.

Periodically, or alternatively, in response to a determination that the power supply voltage has changed, the local server 27 may read out the stored power supply voltage value from the fact data store 7 and send this together with a timestamp to the desktop nodes 26 of each of the households 24 in the relevant geographic region through the first bidirectional communications link 3b of the local server 27. Each desktop node 26 receives the power supply voltage value and timestamp through the second bidirectional communications link 3b of the desktop node 26, and stores the power supply voltage value and timestamp in the fact data store 7 of the desktop node 26.

The desktop node 26 may then read out the stored power supply voltage value and timestamp from the fact data store 7 and send this to the display 22 of the household 24 through the first bidirectional communications link 3b of the desktop node 26. The display 22 receives the power supply voltage value and timestamp through the second bidirectional communications link 3b of the display 22, and stores the power supply voltage value and timestamp in the fact data store 7 of the display 22.

It should be noted that the desktop node 26 does not send the stream of time series temperature measurement data originating from the temperature sensor 25 to the local server 27. This temperature measurement data is not required by the local server 27 or the higher level group server 28, and accordingly, it is not sent to them. By stopping sending time series data upwards through the hierarchy of nodes 2 making up the network 20 at the highest node 2 in the hierarchy which requires the time series data the amount of data transmitted through the network, and the amount of data received and stored by the higher level nodes 2, can kept to a minimum, avoiding unnecessary communications infrastructure and node hardware costs.

Similarly, multiple streams of time series data may be combined or amalgamated at a node 2 into a single stream of time series data including only the data actually required by higher level nodes 2, and the combined or amalgamated series of time series data sent to higher level nodes 2 in the hierarchy to minimize the amount of data transmitted through the network, and the amount of data received and stored by the higher level nodes 2.

The display 22 may then read out the stored power supply voltage value and timestamp from the fact data store 7 and send this to the smart meter 21 of the household 24 through the first bidirectional communications link 3b of the display 22. The smart meter 21 receives the power supply voltage value and timestamp through the second bidirectional communications link 3b of the smart meter 21.

As explained above, the smart meter 21 has a stored power supply voltage value in the fact data store 7 of the smart meter 21 for use in generating power consumption values. When a new power supply voltage value and timestamp are received the smart meter 21 compares the timestamp of the newly received power supply voltage value to the timestamp of the stored power supply voltage value. If the newly received power supply voltage value has a more recent timestamp than the stored value, the newly received value and timestamp are used to replace the stored value and timestamp, for example by overwriting the stored values with the newer values. Alternatively, if the newly received power supply voltage value does not have a more recent timestamp than the stored value, the newly received power supply voltage value and timestamp are discarded and the stored values are left unchanged.

It may appear at first sight unlikely that a newly received fact value would not have a more recent timestamp than a stored fact value. Generally, in a network having a simple topology as shown in the examples of figures 4 and 5 where communications are reliable so that the communications links 3a and 3b are usually operating between the nodes 2 it would be unusual for a newly received value not to have a more recent timestamp than a stored value. Further, even if the communications are not reliable, but the communications have a low latency when they are operating so that messages are transmitted quickly between nodes it would also be unusual for a newly received value not to have a more recent timestamp than a stored value. However, in more complex network topologies, and particularly where communications are unreliable so that the communications links 3a and 3b between the nodes 2 may not be available at times, and/or communications are relatively slow, it may be common for fact values to be received out of order at a node 2 by way of different routes.

In some embodiments it may not be necessary to associate timestamps with fact values, it may be sufficient to simply assume that a received fact will always be more recent than a stored fact. Whether this assumption is sufficient or whether timestamps need to be used with fact values can be decided based on the properties of the network and nodes in any specific application.

Data is passed from the local server 27 to the group server 28. The group server 28 uses this data to carry out analysis and trends across multiple households.

Each type of fact data used in the system has a particular node 2 identified as the master, or owning node 2 for that fact. Only the owning node 2 for a fact issues a value of the fact with an associated timestamp, so that the timestamp indicates when the fact value was issued or generated by the owning node 2. The fact value issued by the owning node 2 is used to overwrite all earlier values of the fact stored in other nodes 2.

In the examples discussed above, the owning node 2 for the power supply voltage value fact is the local server 27, and each power supply voltage value issued by the local server 27 is used to overwrite all earlier issued power supply voltage values stored in the desktop node 26, display 22, and smart meter 21 linked to the local server 27.

The owning node 2 for the electricity utility provider tariff is the local server 27, and each tariff issued by the local server 27 is used to overwrite all earlier issued tariffs stored in the desktop node 26 and display 22, linked to the local server 27.

The owning node 2 for the household temperature model is the desktop node 26, and each household temperature model issued by the desktop node 26 is used to overwrite the earlier issued household temperature model stored in the display 22, linked to the desktop node 26.

In an alternative embodiment the desktop node 26 may use the time series of heating operation data, the time series of temperature measurement data, and the time series of appliance switch on and switch off data event data stored in the time series data store of the desktop node 26 to locally adjust, or update, a stored household temperature model stored in the fact data store 4 of the desktop node 26. This local updating may, for example, adjust the household temperature model stored in the desktop node 26 to take into account the expected effects of the switching on and off of household appliances.

The locally updated value of the household temperature model may then be sent by the desktop node 26 to the display 22. The display 22 may use the locally updated value of the household temperature model received from the desktop node 26 to replace the household temperature model stored in the fact data store 4 of the display 22. The locally updated value of the household temperature model may then be used by the display 22 to control the heating system 29.

In this embodiment, the time series of heating operation data, the time series of temperature measurement data, and the time series of appliance switch on and switch off data event data are all sent as time series data streams from the desktop node 26 to the local server 27. At the local server 27, these sets of time series data are combined with environmental data to calculate a value for the household temperature model. The environmental data may be, for example, weather data from local weather stations identifying parameters such as air temperature, wind speeds, levels of sunlight, and the like.

In this embodiment the local server 27 is the owning node for the household temperature model. When the calculated household temperature model value is different from the stored household temperature model value the local server 27 replaces a stored household temperature model value with the new household temperature model value and assigns the new household temperature model a timestamp. The new household temperature model value and timestamp are then sent to the desktop node 26 by the local server 27. If the newly received household temperature model value has a more recent timestamp than the stored household temperature model value stored by the desktop node 26, the newly received value and timestamp are used to replace the stored value and timestamp, for example by overwriting. Alternatively, if the newly received household temperature model value does not have a more recent timestamp than the stored value the newly received household temperature model value and timestamp are discarded and the stored values left unchanged.

As discussed above, the stored household temperature model value may be locally updated by the desktop node 26. When such local updating is carried out the timestamp associated with the stored household temperature model value is not changed. As a result, local updating will not interfere with the more accurate updating of the household temperature model value by the owning node, the local server 27.

When the newly received household temperature model value has a more recent timestamp than the stored household temperature model value stored by the desktop node 26 so that the newly received value and timestamp are used to replace the stored value and timestamp at the desktop node 26, the desktop node also send the new household temperature model value and timestamp to the display 22. If the newly received household temperature model value has a more recent timestamp than the stored household temperature model value stored by the display 22, the newly received value and timestamp are used to replace the stored value and timestamp, for example by overwriting. Alternatively, if the newly received household temperature model value does not have a more recent timestamp than the stored value the newly received household temperature model value and timestamp are discarded and the stored values left unchanged. The display 22 may then use the stored household temperature model value to control the household temperature by switching the heating system 29 on and off.

These principles of ownership of facts may be extended further and a hierarchy of ownership may be defined for a fact where different nodes are identified as master, or owning nodes with different status for that fact, with facts issued by higher status owners replacing those issued by lower status owners.

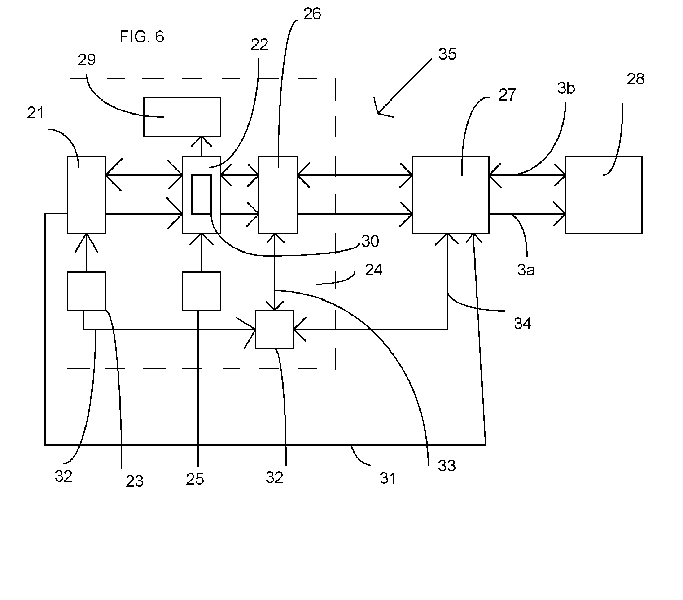

Figure 6 shows a more complex nodal data processing system 35 than that shown in figures 4 and 5. Figure 6 shows a single branch of the nodal data processing system 35. This embodiment includes all of the elements of the first embodiment described above, and these will not be described again. The nodal data processing system 35 of figure 6 further comprises an additional unidirectional data communications link 31. This may, for example, be an AMI connection. The additional communications link 31 can provide an alternative route for power measurement time series data to be sent from the smart meter 21 to the local server 27 if household nodes such as the display 22 and desktop node 26, or the connections between them, are unavailable for prolonged periods. This may be desirable in order to allow reliable billing by the electricity provider.

The nodal data processing system 35 of figure 6 further comprises a household gateway 32. The household gateway 32 is connected to the smart meter 23, the desktop node 26, and the local server 27 through bidirectional communications links 32, 33 and 34 respectively. The communications link 34 will generally be provided by a public communications network such as the internet. The household gateway may provide an alternative communications path between these network elements. This may be desirable in case the internet connection from the desktop node 26 is unavailable.

It is simple to add nodes to a nodal data processing system according to the present invention. As can be seen by comparing the embodiments of figures 4 and 6 above, when new nodes are added the existing part of the system will continue operating as before and all that is required is to inform the nodes in communication with the added node or nodes which fact data and series time data should be sent to the new nodes, and to identify any facts which were to be owned by the new nodes. Any issues regarding multiple copies of time series data or fact data being received at a node as a result of changes in the system topography will be automatically resolved by the timestamp procedures discussed above.

Similarly, it is simple to remove nodes from a nodal data processing system according to the present invention.

As discussed above, the communications links 3a and 3b between the desktop node 26, the local server 27, and the group server 28 may be provided by a public communications network such as the internet. As a result, communications along these communications links may be unreliable or intermittently available so that time series data and fact data may be delayed for a significant amount of time before they can be sent from one node to another. As discussed above, the communications links 3a and 3b between the smart meter 21, the display 22 and the desktop node 26 may be provided by wireless communication links. As a result, communications along these communications links may be intermittently available so that time series data and fact data may be delayed for a significant amount of time before they can be sent from one node to another. These household wireless communications links may, for example, be unavailable at times in order to save power or cost, or because they are being used for other purposes.

Further, in some cases some nodes may only be intermittently available. The desktop node 26 may be provided by a household computer such as a desktop PC. In this case the desktop node 26 will only be available for use in the nodal data processing system 1 when the household computer is switched on.

In the nodal data processing systems described above, although time series data is transferred only upwardly through the hierarchy it is not essential that all time series data is transferred upwardly to the top of the hierarchy. Time series data may simply stop at any particular node and not be sent further up the hierarchy if it is not required by the higher level nodes. In many cases time series data may be combined with other data in a node to form a new time series of data and only the new time series of data, and not the original time series of data, is required by higher level nodes.

In the embodiments described above the data processing functions of the network nodes have been described. It would be possible for the hardware providing the nodes to also carry out further additional data processing or communications functions. In some examples, some nodes may act as displays to display data produced at other nodes to users. For example, the smart meter may not be at a convenient location to be viewed by a user, so if urgent user notification is generated by the smart meter it may be desirable to forward this message to the household display device or desktop node where it can be displayed more visibly to the user. Such an urgent notification may for example be a notification of a problem with the smart meter produced by an on-board diagnostic function.

In some examples, some nodes may act as user interfaces allowing user instructions to be input for use at other nodes by users. For example, the smart meter may not be at a convenient location to be used as a user interface by a user, and may not be large enough to accommodate an easily operated user interface, so that if user instructions are required to be input to the smart meter it may be desirable to use a user interface of the household display device or desktop node which may be more readily accessible and useable by the user.

In some examples, some nodes may act as communications devices such as routers carrying data between other nodes. For example, where the desktop node is acting as a display or user interface for the smart meter, the display device may conveniently act as a router and simply pass the data for display and the user input instructions between the desktop node and the smart meter without processing this data and instructions.

The nodal data processing system according to the present invention is able to function even when communications between the nodes are intermittent. Time series data and fact data can be held and stored at a node when communications are not available, and sent to destination nodes when communications are available. The use of timestamps allows time series data to be correctly reproduced even when the data is delayed or received out of sequence. Further, the use of timestamps allows the most recent fact data to be identified and used regardless of delays in receiving the fact data.

As explained above, the nodal data processing system of the present invention does not use orders or instructions from higher level nodes to directly control lower level nodes. Systems of this direct control type generally cannot operate effectively with intermittent communications. Instead, the nodal data processing system of the present invention defines facts or models at higher level nodes and these facts or models are used to make decisions and carry out calculations locally at lower level nodes. As a result, when a communication link is not available, the lower level nodes below the unavailable communication link form a fully functional sub-network and continue operating based on stored facts and models, albeit generally with reduced efficacy, until communication is restored.

For example, in the embodiments discussed above, the display can control the heating system using the store household temperature model even when it is unable to communicate with the desktop node. When communications are restored the household temperature model can be updated. Although the efficiency of the control of the heating system by the display will tend to drop over time as real conditions change away from the stored model, the heating system can still be controlled.

As a result of the simplicity of adding nodes to the system and the capacity of lower level nodes to operate autonomously without input from the higher level nodes a nodal data processing system according to the present invention can be assembled by setting up a low level network of nodes and then adding the higher level nodes later. The system will be able operate throughout the assembly process, starting as an autonomous sub-network of low level nodes and gradually increasing in efficiency and functionality as the higher level nodes are added. In the illustrated embodiments, the nodes within a single household can be set up as a household sub-network and can function autonomously to control household functions. Subsequently, a number of these individual household sub-networks can be incorporated into a larger network by connecting the household sub-networks to the local servers and group servers.

It should be noted that when this is done it is not necessary for the individual sub networks to use a common communications or data processing protocol. Provided that the different sub-networks can all be understood and communicated with by the relevant higher level nodes it is not essential that the different sub-networks should be able to understand and communicate with one another.

The description above refers to an electricity utility provider. In practice, different households may have different electricity utility providers so that power consumption data for different households must be provided to the appropriate electricity utility provider. Further, the different households must be provided with an appropriate tariff for the correct electricity utility provider.

The invention has been discussed primarily with respect to consumption of electricity, however it will be appreciated that the methods described herein can equally be applied to consumption of water or gas supplied to a household. The invention may also be applied to other fields such as logistics or transport systems.

Consumption of water and gas can be measured using techniques that are well known to the skilled person, for example based on use of water and gas meters. Water and gas consumption, in particular water consumption, may be measured at a lower rate, for example at least once every 300 seconds or at least once every 60 seconds, in order to generate water consumption data that may be used to identify events associated with consumption of water. The rate of flow of water or gas at each time interval may be measured, along with the total volume consumed over time in a manner analogous to power and energy measurements of electricity consumption. Additionally or alternatively, water and gas consumption may be measured at measurement points after intervals of volume consumption rather than intervals of time, for example a measurement of time elapsed for each unit volume (e.g. litre) of water to be consumed.

The apparatus described above may be implemented at least in part in software. Those skilled in the art will appreciate that the apparatus described above may be implemented using general purpose computer equipment or using bespoke equipment.

The hardware elements, operating systems and programming languages of such computers are conventional in nature, and it is presumed that those skilled in the art are adequately familiar therewith. Of course, the server functions may be implemented in a distributed fashion on a number of similar platforms, to distribute the processing load.

Here, aspects of the methods and apparatuses described herein can be executed on a mobile station and on a computing device such as a server. Program aspects of the technology can be thought of as "products" or "articles of manufacture" typically in the form of executable code and/or associated data that is carried on or embodied in a type of machine readable medium. "Storage" type media include any or all of the memory of the mobile stations, computers, processors or the like, or associated modules thereof, such as various semiconductor memories, tape drives, disk drives, and the like, which may provide storage at any time for the software programming. All or portions of the software may at times be communicated through the Internet or various other telecommunications networks. Such communications, for example, may enable loading of the software from one computer or processor into another computer or processor. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible non-transitory "storage" media, terms such as computer or machine "readable medium" refer to any medium that participates in providing instructions to a processor for execution.

Hence, a machine readable medium may take many forms, including but not limited to, a tangible storage carrier, a carrier wave medium or physical transaction medium. Non-volatile storage media include, for example, optical or magnetic disks, such as any of the storage devices in computer(s) or the like, such as may be used to implement the encoder, the decoder, etc. shown in the drawings. Volatile storage media include dynamic memory, such as the main memory of a computer platform. Tangible transmission media include coaxial cables; copper wire and fiber optics, including the wires that comprise the bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards, paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will appreciate that while the foregoing has described what are considered to be the best mode and, where appropriate, other modes of performing the invention, the invention should not be limited to specific apparatus configurations or method steps disclosed in this description of the preferred embodiment. It is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings. Those skilled in the art will recognize that the invention has a broad range of applications, and that the embodiments may take a wide range of modifications without departing from the inventive concept as defined in the appended claims.

Although the present invention has been described in terms of specific exemplary embodiments, it will be appreciated that various modifications, alterations and/or combinations of features disclosed herein will be apparent to those skilled in the art without departing from the spirit and scope of the invention as set forth in the following claims.

## Claims

1. A method of operating a nodal data processing system comprising a plurality of nodes connected by communications links, the nodes being arranged in a hierarchical structure having higher and lower levels;
wherein data communicated between the nodes is divided into time series data and fact data;
time series data is communicated from a node to a node at a higher level in the hierarchy; and
fact data is communicated from a node to a node at a lower level in the hierarchy.

2. The method of claim 1, wherein fact data is communicated from a node to nodes at both a lower level and a higher level in the hierarchy.

3. The method of claim 1 or claim 2, wherein the time series data comprises a series of values each having an associated sequence indicator.

4. The method of any one of claim 3, wherein a node receiving time series data from a lower level node and forwarding the time series data to a higher level node forwards the received sequence indicators without change.

5. The method of any preceding claim, wherein the fact data comprises a fact value and an associated sequence indicator.

6. The method of claim 3 or claim 5, wherein each sequence indicator is a timestamp;
and
preferably wherein each timestamp indicates when the associated value was generated.

7. The method of claim 6, wherein a node receiving fact data from a first other node and forwarding the fact data to a second other node forwards the received sequence indicator without change.

8. The method of claim 3, wherein a node receiving time series data from a lower level node and forwarding the time series data to a higher level node also stores the time series data and the received sequence indicators in a storage means; and
preferably wherein the node receiving time series data from a lower level node stores the time series data and the received sequence indicators before forwarding the time series data to a higher level node; and
preferably wherein the node receiving time series data from a lower level node compares the sequence indicators associated with the received time series data to the sequence indicators associated with the stored time series data; and
if the sequence indicators are the same, the received time series data is not stored or forwarded.

9. The method of any preceding claim, wherein a node receiving fact data from a first other node and forwarding the fact series data to a second other node also stores the fact data and the received sequence indicators in a storage means; and
preferably wherein the node receiving fact data from a first other node stores the fact data and the received sequence indicators before forwarding the fact data to a second other node.

10. The method of claim 9, wherein the node receiving fact data from a first other node compares the sequence indicator associated with the received fact data to the sequence indicator associated with stored fact data; and
if the comparison does not indicate that the received fact data is more recent than the stored fact data, the received fact data is not stored or forwarded.

11. The method of claim 9 or claim 10, wherein the node receiving fact data from a first other node compares the sequence indicator associated with the received fact data to the sequence indicator associated with stored fact data; and
if the comparison does indicate that the received fact data is more recent than the stored fact data, the received fact data is not stored, replacing the previously stored fact data, and forwarded.

12. The method of any preceding claim, wherein the time series data comprises a series of utility consumption values measured at a series of different times; and
preferably wherein the utility is selected from gas, electricity and water; and preferably wherein the utility is electricity; and
preferably wherein the measured electricity consumption data includes data of real power and/or reactive power.

13. Computer program code which when run on a computer causes the computer to act as a node to perform the method according to any preceding claim.

14. A computer-implemented node apparatus for use in a nodal data processing system comprising a plurality of nodes connected by communications links, the nodes being arranged in a hierarchical structure having higher and lower levels and data communicated between the nodes being divided into time series data and fact data;
the apparatus comprising:
a time series data receiver for receiving time series data communicated from a node at a lower level in the hierarchy;
a time series data transmitter for communicating time series data to a node at a higher level in the hierarchy;
a fact data receiver for receiving fact data communicated from a node in the network;
and
a fact data transmitter for communicating fact data to another node in the network.

15. A nodal data processing system comprising a plurality of computer-implemented node apparatus according to claim 14 interconnected by communications links.
